# FASCICULE DE BREVET EUROPEEN

(11) **EP 4 028 292 B1**
(45) Date de publication et mention de la délivrance du brevet: **27.08.2025**
(21) Numéro de dépôt: 20745206.1
(22) Date de dépôt: 27.07.2020
(51) Int. Cl.: B60S 1/24, F16C 11/06

(54) **MANETON, BOÎTE À ROTULE ET SYSTÈME DE TRINGLERIE D'ACTIONNEMENT D'ESSUIE-GLACES CORRESPONDANT ET SON PROCÉDÉ D'ASSEMBLAGE**
KURBELZAPFEN, KUGELGELENK UND ENTSPRECHENDES SCHEIBENWISCHERBETÄTIGUNGSGESTÄNGESYSTEM UND VERFAHREN ZU DESSEN ZUSAMMENBAU
CRANK PIN, BALL JOINT AND CORRESPONDING WIPER ACTUATING LINKAGE SYSTEM AND METHOD FOR THE ASSEMBLY THEREOF

(30) Priorité: 09.09.2019 FR 1909902
(43) Date de publication de la demande: 20.07.2022
(73) Titulaire: Valeo Systèmes d'Essuyage, 78322 Le Mesnil Saint Denis (FR)
(72) Inventeur: GIRODOT, Cyrille, 63500 ISSOIRE (FR)
(74) Mandataire: Valeo Visibility
(86) Numéro de dépôt international: PCT/EP2020/071163
(87) Numéro de publication internationale: WO 2021/047812

(56) Documents cités:
- FR-A1- 2 648 411
- FR-A1- 2 764 952
- US-A- 2 309 281
- US-A- 4 902 157
- US-A- 6 113 301

## Description

La présente invention relève du domaine des systèmes de tringlerie d'actionnement d'essuie-glaces. La présente invention concerne notamment un maneton et une boîte à rotule pour une bielle d'un tel système. L'invention concerne également le procédé d'assemblage d'un tel système.

Une automobile est classiquement équipée d'essuie-glaces pour assurer l'essuyage et le lavage du pare-brise et éviter que la vision qu'a le conducteur de son environnement ne soit perturbée. Ces essuie-glaces comprennent en général un bras d'actionnement d'un balai d'essuyage, effectuant un mouvement de va-et-vient angulaire. Les balais d'essuyage, généralement allongés, sont porteurs de lames racleuses réalisées en une matière élastique. En fonctionnement, ces lames racleuses frottent contre le pare-brise et évacuent l'eau en l'amenant en dehors du champ de vision du conducteur. Le bras d'actionnement de chaque balai d'essuyage est relié par son extrémité opposée au balai à un système de tringlerie pour son entraînement en rotation.

Classiquement, un système de tringlerie comprend au moins une bielle dont chaque extrémité longitudinale est articulée sur une manivelle solidaire en rotation d'un arbre d'entraînement d'un essuie-glace, et plus particulièrement de son bras.

Chaque extrémité longitudinale de la bielle porte une boîte à rotule dans laquelle est monté un maneton de façon à former une liaison de type rotule. Le maneton est solidaire d'une extrémité d'une manivelle dont une extrémité opposée est solidaire d'un arbre d'entraînement d'un essuie-glace.

Le document US 2,309,281 A divulgue une boîte à rotule, telle que connu dans l'art antérieur

La boîte à rotule définit intérieurement une cavité de montage d'au moins une portion du maneton, qui est d'autre part fixé à la manivelle.

Le maneton peut être emboité en force dans la cavité interne de la boîte à rotule. Il peut être maintenu dans la cavité par encliquetage, ou à l'aide d'un élément de retenue supplémentaire, et la boîte à rotule peut être verrouillée sur la bielle en réalisant un deuxième mouvement, par exemple en venant verrouiller par encliquetage ou à l'aide d'un autre dispositif supplémentaire. Selon ces solutions connues, l'assemblage de la bielle necessite plusieurs mouvements et implique donc plusieurs efforts de montage pour solidariser le maneton avec la boîte à rotule puis verrouiller l'ensemble sur la bielle.

Selon une autre solution connue, la boîte à rotule peut être réalisée par deux demi-boîtes assemblées autour du maneton. La boîte à rotule peut ensuite être assemblée à la bielle par encliquetage. L'effort d'encliquetage assure alors une double fonction de maintenir la bielle sur la boîte à rotule et la boîte à rotule sur le maneton. Cependant, en utilisation de la bielle, il existe un risque de démontage accidentel de la bielle lorsque les efforts dans la bielle sont trop importants.

En outre, selon la configuration de la boîte à rotule, l'assemblage du système de tringlerie sur les lignes d'assemblage de véhicule automobile peut nécessiter un outillage très spécifique tel que des pinces, des sertisseurs par exemple pour venir sertir la boîte à rotule sur le maneton. Cela nécessite également une mise en place et des efforts d'alignement pour assembler les différentes parties de la bielle du système de tringlerie. Un tel assemblage peut donc s'avérer complexe.

L'invention a pour objectif de pallier au moins partiellement ces inconvénients de l'art antérieur en proposant une solution permettant de réduire les efforts de montage d'une telle bielle tout en limitant le risque de démontage accidentel en utilisation de la bielle. L'invention a également pour autre objectif de permettre un assemblage simple de la bielle, qui puisse être réalisé manuellement sans l'aide d'outils spécifiques, sur les lignes d'assemblage de véhicule automobile.

À cet effet l'invention a pour objet un maneton pour une bielle d'un système de tringlerie d'actionnement d'essuie-glaces, le maneton étant configuré pour être reçu dans une cavité interne complémentaire d'une boîte à rotule du système de tringlerie. Selon l'invention, le maneton comporte une portion sphérique tronquée.

En particulier, la portion sphérique tronquée présente au moins un secteur sphérique et au moins un secteur tronqué. Ledit au moins un secteur tronqué est en retrait par rapport à une sphère dans laquelle s'inscrit ledit au moins un secteur sphérique de la portion sphérique tronquée.

Ledit au moins un secteur tronqué est réalisé par un méplat. Ainsi, la portion sphérique tronquée présente au moins un secteur sphérique et au moins un méplat.

La portion sphérique tronquée est configurée pour être engagée dans la cavité interne complémentaire de la boîte à rotule avec son ou ses secteurs sphériques en regard d'une portion d'ouverture de la boîte à rotule, puis tournée jusqu'à une position angulaire d'assemblage prédéfinie. Selon un aspect de l'invention, dans cette position, le ou les secteurs sphériques du maneton sont destinés à être agencés chacun en appui contre une portion de maintien, de préférence sphérique, en regard, de la boîte à rotule. Le ou les secteurs tronqués, tels que des méplats, du maneton sont destinés à être agencés chacun en regard d'une portion d'ouverture de la boîte à rotule.

Lors de l'assemblage, la portion sphérique tronquée du maneton est destinée à coopérer par glissement avec la cavité interne de forme complémentaire de la boîte à rotule de façon à former une liaison de type rotule. Ceci permet de réduire les efforts de montage.

Le maneton peut en outre comporter une ou plusieurs caractéristiques suivantes décrites ci-après, prises séparément ou en combinaison.

Selon un exemple de réalisation, le ou les méplats de la portion sphérique tronquée sont de forme générale circulaire ou en forme de bulbe.

Le secteur sphérique de la portion sphérique tronquée peut s'étendre sur un secteur angulaire inférieur ou égal à 180°.

Selon l'invention, la portion sphérique tronquée présente au moins deux secteurs sphériques opposés et au moins deux secteurs tronqués opposés. Les deux secteurs tronqués opposés sont deux méplats opposés réalisés selon deux plans parallèles.

Selon un aspect de l'invention, lesdits au moins deux secteurs sphériques de la portion sphérique tronquée s'étendent respectivement sur un secteur angulaire inférieur ou égal à 90°. Le secteur angulaire est par exemple compris entre 30° et 90°, et est de préférence de l'ordre de 90°.

Selon l'invention, le maneton présente une forme générale allongée selon un axe longitudinal. L'axe longitudinal passe par le centre de la portion sphérique tronquée. De façon alternative, la portion sphérique tronquée n'est pas centrée sur l'axe longitudinal du maneton.

Le maneton est configuré pour être assemblé avec la boîte à rotule par un mouvement de translation selon cet axe longitudinal puis de rotation par rapport à la boîte à rotule, de préférence d'un quart de tour, autour de cet axe longitudinal, jusqu'à la position angulaire d'assemblage prédéfinie.

Selon un mode de réalisation, le maneton comporte au moins une portion cylindrique, agencée dans le prolongement axial de ladite portion sphérique.

Par exemple, le maneton peut comporter au moins une portion cylindrique tronquée présentant au moins un secteur tronqué dans la continuité d'un secteur tronqué de la portion sphérique tronquée. En particulier, ledit au moins un secteur tronqué de la portion cylindrique tronquée est réalisé par un méplat. Un tel méplat peut être dans la continuité d'un méplat de la portion sphérique tronquée.

De préférence, la portion cylindrique tronquée présente au moins deux secteurs tronqués, tels que deux méplats, chacun dans la continuité d'un des méplats de la portion sphérique tronquée.

Selon un mode de réalisation, le diamètre de la portion cylindrique, par exemple tronquée, est inférieur au diamètre de la portion sphérique tronquée.

Le ou les méplats au niveau de la portion cylindrique tronquée sont par exemple de forme générale rectangulaire.

Selon un autre aspect, deux méplats opposés de la portion sphérique tronquée, et éventuellement de la portion cylindrique tronquée, sont symétriques par rapport à un plan médian passant par le centre de la portion sphérique tronquée et contenant l'axe longitudinal du maneton. Ceci permet de faciliter un montage dans les deux sens.

De façon alternative, les méplats peuvent ne pas être symétriques. Cela permet de détromper le sens de montage de la bielle.

Selon encore un autre aspect, le maneton comporte une première portion d'extrémité longitudinale et une deuxième portion d'extrémité longitudinale, la portion sphérique tronquée étant située axialement entre les première et deuxième portions d'extrémités longitudinales.

L'une des portions d'extrémité longitudinale, par exemple la première, permet d'assurer une fonction anti-rotation d'une bielle destinée à recevoir le maneton par rapport au maneton.

Les portions d'extrémité longitudinale peuvent ne pas être tronquées, notamment être exemptes de méplats. Selon un exemple, les portions d'extrémité sont de forme générale cylindrique.

En variante, au moins l'une des portions d'extrémité longitudinale, par exemple la deuxième portion d'extrémité longitudinale, voire les deux, peut ou peuvent être tronquée(s) et présenter au moins un méplat.

Selon une variante de réalisation particulière, le maneton comporte une portion cylindrique agencée dans le prolongement axial de la portion sphérique tronquée, qui n'est pas tronquée. Il peut s'agir par exemple d'une portion cylindrique intermédiaire située axialement entre la portion sphérique tronquée et une portion d'extrémité longitudinale.

La portion sphérique tronquée peut présenter un diamètre supérieur au diamètre de la première portion d'extrémité longitudinale et au diamètre de la deuxième portion d'extrémité longitudinale.

Le maneton est configuré pour être assemblé d'une part à une bielle du système de tringlerie comportant la boîte à rotule, et d'autre part à une autre pièce du système de tringlerie, telle qu'une manivelle.

L'invention concerne aussi une boîte à rotule pour une bielle d'un système de tringlerie d'actionnement d'essuie-glaces, la boîte à rotule comportant une cavité interne configurée pour recevoir un maneton complémentaire tel que défini précédemment. La cavité interne présente au moins une première portion de maintien du maneton et au moins une deuxième portion d'ouverture augmentant une dimension de la cavité interne.

La boîte à rotule peut en outre comporter une ou plusieurs caractéristiques suivantes décrites ci-après, prises séparément ou en combinaison.

Ladite au moins une première portion peut définir une portion sphérique.

Selon un mode de réalisation, la cavité interne présente au moins deux premières portions de maintien opposées et au moins deux deuxièmes portions d'ouverture opposées telles que la distance maximale entre les deux deuxièmes portions est supérieure à la distance maximale entre les deux premières portions.

Cette configuration de la boîte à rotule facilite le montage du maneton dans la cavité interne de la boîte à rotule en disposant le ou chaque secteur sphérique de la portion sphérique tronquée au niveau d'une deuxième portion d'ouverture. L'insertion peut avantageusement se faire selon un axe d'engagement confondu avec l'axe longitudinal du maneton. Le maneton peut ensuite être déplacé par un mouvement de rotation jusqu'à ce que le ou chaque secteur sphérique du maneton vienne en regard et en appui contre une première portion de maintien, de préférence sphérique, de la cavité interne. De plus, les surfaces internes de la ou des deuxièmes portions d'ouvertures peuvent coopérer avec le ou les méplats du maneton pour empêcher sa rotation dans la boîte à rotule.

La surface interne de la ou des deuxièmes portions d'ouverture peuvent être rectilignes ou courbes.

Selon un autre aspect, la boîte à rotule présente une forme générale allongée selon un axe longitudinal passant par le centre de la cavité interne.

Selon un mode de réalisation, la cavité interne de la boîte à rotule comporte un fond de cavité de forme générale cylindrique centré sur l'axe longitudinal de la boîte à rotule.

Selon un aspect, le fond de cavité est configuré pour recevoir une portion d'extrémité longitudinale, par exemple cylindrique, du maneton.

Le diamètre du fond de cavité cylindrique peut être inférieur à la distance maximale entre deux premières portions de maintien opposées.

Selon un mode de réalisation, la boîte à rotule est surmoulée sur une bielle du système de tringlerie.

La boîte à rotule est par exemple réalisée en matière plastique.

La présente invention concerne encore un système de tringlerie d'actionnement d'essuie-glaces, comportant au moins une bielle présentant une forme générale allongée. Ladite au moins une bielle comporte à une extrémité longitudinale une boîte à rotule telle que définie ci-dessus et recevant un maneton tel que décrit précédemment, dans une position angulaire d'assemblage prédéfinie. Dans cette position, ledit au moins un secteur sphérique de la portion sphérique tronquée du maneton est agencé en appui contre ladite au moins une première portion de maintien en regard de la boîte à rotule.

Avantageusement, avec une ou plusieurs premières portions de maintien sphériques de la boîte à rotule, la coopération de forme entre le maneton et la boîte à rotule permet de mieux transmettre au maneton les efforts auxquels la bielle est soumise en fonctionnement.

Selon un aspect de l'invention, le diamètre de la portion sphérique tronquée du maneton est inférieur à la distance maximale entre deux premières portions de maintien de la boîte à rotule.

Selon un autre aspect, la ou chaque première portion de maintien sphérique de la boîte à rotule s'étend sur un secteur angulaire inférieur à celui d'un secteur sphérique de la portion sphérique tronquée du maneton.

Dans la position d'assemblage prédéfinie, le maneton est immobilisé en rotation par rapport à la boîte à rotule. Le maneton peut présenter au moins une arête à l'intersection d'un secteur sphérique et d'un méplat de la portion sphérique tronquée apte à venir en butée contre une surface interne d'une deuxième portion d'ouverture de la boîte à rotule.

Selon encore un autre aspect, la longueur de la cavité interne de la boîte à rotule est inférieure à la longueur du maneton.

L'invention concerne enfin un procédé d'assemblage d'une bielle du système de tringlerie tel que décrit ci-dessus, la bielle comportant une boîte à rotule à une extrémité longitudinale. Le procédé comprend les étapes suivantes :
- insérer le maneton dans la cavité interne de la boîte à rotule portée par la bielle par un mouvement de translation relatif, de sorte que ledit au moins un secteur sphérique de la portion sphérique tronquée du maneton est agencé en regard d'une deuxième portion d'ouverture de la cavité interne de la boîte à rotule, et que ledit au moins un secteur tronqué, tel qu'un méplat, de la portion sphérique tronquée du maneton est agencé en regard d'une première portion de maintien de la cavité interne de la boîte à rotule, et
- effectuer un mouvement de rotation relatif entre le maneton et la boîte à rotule, jusqu'à une position angulaire d'assemblage prédéfinie dans laquelle ledit au moins un secteur sphérique de la portion sphérique tronquée du maneton vient en regard d'une première portion de maintien de la cavité interne de la boîte à rotule.

La rotation est par exemple d'un quart de tour.

Ainsi, on peut avoir un montage simple de la bielle, en particulier par des opérateurs de production d'un constructeur automobile, ne nécessitant aucun outil spécifique. L'entraînement en rotation jusqu'à la position angulaire d'assemblage prédéfinie est réalisée avec des efforts minimums.

Selon un aspect de l'invention, la boîte à rotule est réalisée directement sur la bielle par surmoulage au niveau d'un orifice à une extrémité longitudinale de la bielle.

Le procédé peut comporter une étape de fixation, par exemple par vissage, du maneton à une pièce du système de tringlerie, telle qu'une manivelle. Le maneton peut être fixé à la bielle par sa portion d'extrémité longitudinale non destinée à être entourée par la boîte à rotule à l'assemblage.

D'autres avantages et caractéristiques de l'invention apparaîtront plus clairement à la lecture de la description suivante donnée à titre d'exemple illustratif et non limitatif, et des dessins annexés parmi lesquels :
[Fig. 1] La figure 1 est une vue schématique en perspective d'un système de tringlerie d'actionnement d'essuie-glaces d'un véhicule automobile.
[Fig. 2] La figure 2 est une vue à plus grande échelle d'une partie du système de tringlerie de la figure 1.
[Fig. 3] La figure 3 est une première vue en perspective d'un maneton d'une bielle du système de tringlerie des figures 1 et 2.
[Fig. 4] La figure 4 est une deuxième vue en perspective du maneton de la figure 3.
[Fig. 5] La figure 5 est une vue de dessous d'une manivelle du système de tringlerie assemblée au maneton des figures 3 et 4.
[Fig. 6] La figure 6 est une vue partielle en perspective d'une bielle comportant une boîte à rotule pouvant accueillir le maneton des figures 3 et 4.
[Fig. 7] La figure 7 est une vue agrandie d'une extrémité de la bielle de la figure 6 portant la boîte à rotule.
[Fig. 8] La figure 8 montre le maneton des figures 3 et 4 dans une position d'engagement dans la boîte à rotule lors de l'assemblage de la bielle des figures 6 et 7.
[Fig. 9] La figure 9 montre le maneton reçu dans la boîte à rotule dans une position angulaire d'assemblage après rotation.
[Fig. 10] La figure 10 est une vue éclatée de la bielle de la figure 2 avant insertion du maneton dans la boîte à rotule.
[Fig. 11] La figure 11 montre le positionnement de la bielle portant la boîte à rotule par rapport à la manivelle portant le maneton avant et après rotation.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

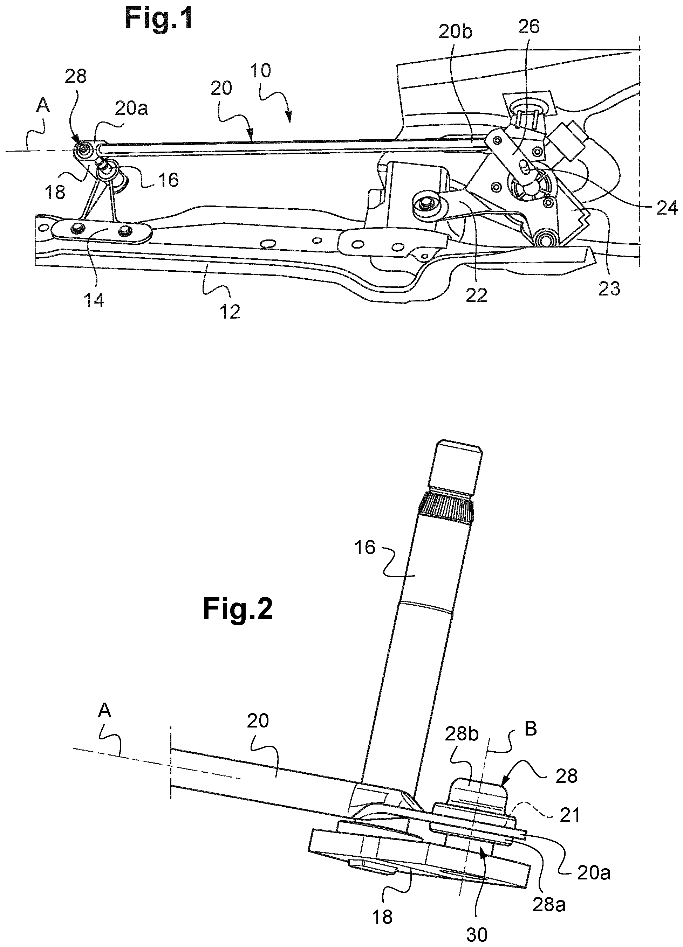

On se réfère d'abord à la figure 1 qui représente un système de tringlerie 10 pour l'actionnement d'essuie-glaces d'un véhicule automobile, nommé système 10 par la suite. À l'état monté dans un véhicule automobile, le système 10 est typiquement fixé au bâti 12 du véhicule.

Le système 10 comprend une platine 14 de support d'un palier de guidage en rotation d'un arbre 16 d'entraînement d'un premier essuie-glace (non représenté). Ce premier essuie-glace comprend classiquement un bras d'actionnement d'un balai d'essuyage (non représenté). Une extrémité longitudinale du bras d'entraînement est solidarisée à l'arbre 16 d'entraînement et son extrémité longitudinale opposée est raccordée au balai d'essuyage. Le balai d'essuyage porte une lame racleuse destinée à essuyer le pare-brise du véhicule.

Le système 10 comprend en outre une manivelle 18 et une bielle 20. La bielle 20 présente une forme générale allongée sensiblement rectiligne s'étendant le long d'un axe d'allongement A entre une première extrémité longitudinale 20a et une seconde extrémité longitudinale 20b. Une extrémité de la manivelle 18 est solidaire en rotation de l'arbre 16 d'entraînement du premier essuie-glace. L'autre extrémité de la manivelle 18 est articulée à la première extrémité longitudinale 20a de la bielle 20. La bielle 20 est par exemple réalisée par emboutissage d'une tôle.

Le système 10 comprend une autre platine 22 de support d'un motoréducteur électrique 23, dont l'arbre de sortie 24 est destiné à entraîner un second essuie-glace (non représenté). Ce second essuie-glace, non représenté, est similaire à celui décrit dans ce qui précède.

Le système 10 comporte une autre manivelle 26 dont une extrémité est solidaire en rotation de l'arbre de sortie 24. L'autre extrémité de la manivelle 26 est articulée à la seconde extrémité longitudinale 20b de la bielle 20.

Chaque extrémité longitudinale 20a, 20b de la bielle 20 est articulée à la manivelle 18, 26 correspondante par l'intermédiaire d'un réceptacle nommé boîte à rotule 28, mieux visible sur la figure 2, et d'un maneton 30 correspondant.

Le maneton 30 est conformé pour être reçu au moins en partie dans une cavité interne complémentaire de la boîte à rotule 28, de façon à former une liaison de type rotule. La liaison entre le maneton 30 et la boîte à rotule 28 assure l'articulation entre la bielle 20 et la manivelle, par exemple 18, correspondante. Ainsi, le maneton est destiné à être assemblé d'une part à une bielle 20 du système de tringlerie comportant la boîte à rotule 28, et d'autre part à une autre pièce du système de tringlerie, telle que la manivelle 18.

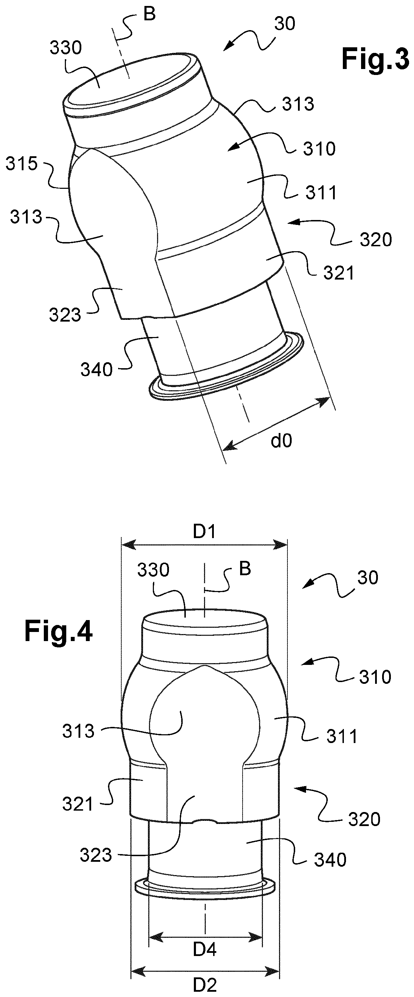

En se référant aux figures 3 et 4, on décrit ci-après plus en détail le maneton 30.

Selon le mode de réalisation décrit, le maneton 30 présente une forme générale allongée selon un axe longitudinal B.

Le maneton 30 comprend une portion sphérique tronquée 310. Cette portion sphérique tronquée 310 est destinée à être logée au moins en partie dans la boîte à rotule correspondante portée par la bielle (non visibles sur les figures 3 et 4).

Selon le mode de réalisation décrit, la portion sphérique tronquée 310 est centrée sur l'axe longitudinal B du maneton 30.

Selon une variante de réalisée non représentée, la portion sphérique tronquée peut ne pas être centrée sur l'axe longitudinal B. Une telle configuration permet par exemple un détrompage du sens de montage de la bielle, notamment entre les extrémités de la bielle.

La portion sphérique tronquée 310 présente au moins un secteur sphérique et au moins un secteur tronqué. Un tel secteur tronqué peut être formé par un méplat. Le méplat peut être réalisé selon un plan parallèle à l'axe longitudinal B du maneton 30. La portion sphérique est donc tronquée suivant le plan d'un tel méplat. Autrement dit, le diamètre de la portion sphérique tronquée 310 est diminué au niveau du secteur tronqué, tel qu'un méplat. De plus, le méplat peut être de forme générale circulaire ou en forme de bulbe.

Selon un mode de réalisation non représenté, la portion sphérique tronquée 310 peut présenter un unique secteur tronqué, tel qu'un méplat. La portion sphérique tronquée 310 peut présenter une forme générale en « D » ou sensiblement en « D ». Dans ce cas, le secteur sphérique de la portion sphérique tronquée 310 peut s'étendre sur un secteur angulaire inférieur ou égal à 180°.

Par ailleurs, la portion sphérique tronquée 310 présente autant de secteurs sphériques que de secteurs tronqués, tels que des méplats.

En particulier, la portion sphérique tronquée 310 peut présenter au moins deux secteurs sphériques opposés et au moins deux secteurs tronqués opposés. Les secteurs tronqués opposés sont par exemple des méplats opposés réalisés selon deux plans parallèles. La portion sphérique tronquée 310 est ainsi sectorisée.

Dans l'exemple non limitatif illustré sur les figures 3 et 4, la portion sphérique tronquée 310 présente deux secteurs sphériques 311 opposés et deux secteurs tronqués 313 opposés, tels que des méplats 313 opposés réalisés selon deux plans parallèles. En section transversale, la portion sphérique 310 présente deux bordures diamétralement opposées, qui sont rectilignes et parallèles, et deux autres bordures diamétralement opposées qui sont incurvées.

La couverture angulaire des secteurs sphériques 311 de la portion sphérique tronquée 310 est avantageusement choisie pour limiter le risque de démontage accidentel de la bielle (non visible sur les figures 3 et 4). Dans cet exemple, les deux secteurs sphériques 311 de la portion sphérique tronquée 310 s'étendent respectivement sur un secteur angulaire pouvant atteindre 90°, par exemple compris entre 30° et 90°, de préférence de l'ordre de 90°.

De plus, la portion sphérique tronquée 310 présente un diamètre maximal D1 entre les deux secteurs sphériques 311 supérieur à la distance maximale d0 séparant les deux secteurs tronqués tels que les méplats 313 de la portion sphérique tronquée 310.

En ce qui concerne les méplats 313, ils sont par exemple de forme générale circulaire ou en forme de bulbe. Les plans parallèles des deux méplats 313 sont également parallèles à un plan médian passant par le centre de la portion sphérique tronquée 310 et contenant l'axe longitudinal B du maneton 30. La portion sphérique 310 est donc tronquée selon ces deux plans parallèles. Ceci permet notamment de faciliter un montage du maneton 30 dans la boîte à rotule correspondante dans les deux sens.

Selon une option, les arêtes 315 du maneton à l'intersection d'un secteur sphérique 311 et d'un méplat 313 peuvent être destinées à venir en butée contre une surface interne de la boîte à rotule destinée à recevoir le maneton 30.

Le maneton 30 peut comporter en outre une portion cylindrique tronquée 320. Cette dernière est agencée dans le prolongement axial de la portion sphérique tronquée 310. Les portions tronquées 310 et 320 sont concentriques.

De façon similaire à la portion sphérique tronquée 310, la portion cylindrique tronquée 320 peut présenter au moins un secteur tronqué, en particulier un méplat dans la continuité d'un secteur tronqué tel qu'un méplat de la portion sphérique tronquée 310 et au moins un secteur cylindrique dans le prolongement axial d'un secteur sphérique de la portion sphérique tronquée 310.

Selon le mode de réalisation illustré sur les figures 3 et 4, la portion cylindrique tronquée 320 présente deux secteurs cylindriques 321 opposés. Les deux secteurs cylindriques 321 sont agencés dans le prolongement axial des secteurs sphériques 311. Ces secteurs cylindriques 321 s'étendent sur une même couverture angulaire que les secteurs sphériques 311.

La portion cylindrique tronquée 320 présente également deux méplats 323 dans la continuité des méplats 313 de la portion sphérique tronquée 310. Les deux méplats 323 sont donc réalisés au niveau de la portion cylindrique tronquée 320 selon les deux plans parallèles des méplats 313 de la portion sphérique tronquée 310.

Selon une alternative non représentée, la portion cylindrique 320 peut ne pas être tronquée. Autrement dit, elle peut être exempte de méplats 323.

Les méplats 323 au niveau de la portion cylindrique tronquée 320 sont par exemple de forme générale rectangulaire. Les méplats 313, 323 d'un même côté du maneton 30 présentent selon le mode de réalisation illustré, une partie rectangulaire (correspondant au méplat 323 sur la portion cylindrique tronquée 320) et une partie en bulbe (correspondant au méplat 313 sur la portion sphérique tronquée 310) dont le contour est formé par deux arcs de cercles joints par une forme de pointe à l'opposé de la partie rectangulaire.

Par ailleurs, la portion cylindrique tronquée 320 présente un diamètre maximal D2 entre les deux secteurs cylindriques 321 supérieur à la distance maximale d0 séparant les secteurs tronqués tels que les méplats 323 de la portion cylindrique tronquée 320. Le diamètre D2 de la portion cylindrique tronquée 320 est par exemple inférieur au diamètre D1 de la portion sphérique tronquée 310 entre les secteurs sphériques 311.

En outre, le maneton 30 peut comporter une première portion d'extrémité longitudinale 330 et une deuxième portion d'extrémité longitudinale 340. La portion sphérique tronquée 310 est située axialement entre les première 330 et deuxième 340 portions d'extrémité longitudinale. L'une des portions d'extrémité longitudinale, par exemple la première 330, permet d'assurer une fonction anti-rotation d'une bielle (non représentée sur les figures 3 et 4) correspondante par rapport au maneton 30.

Les portions d'extrémité longitudinale 330, 340 peuvent ne pas être tronqués, et être exemptes de méplats par exemple, comme illustré sur les figures 3 et 4.

Selon un exemple, les portions d'extrémité longitudinale 330, 340 sont respectivement de forme générale cylindrique. La portion sphérique tronquée 310 et les portions d'extrémité longitudinale 330, 340, sont concentriques dans cet exemple. Le diamètre de la première portion d'extrémité longitudinale 330 n'est pas référencé sur les figures 3 et 4, et la deuxième portion d'extrémité longitudinale 340 présente un diamètre D4 schématisé sur la figure 4.

Le diamètre D1 de la portion sphérique tronquée 310 est supérieur au diamètre de la première portion d'extrémité longitudinale 330 et éventuellement au diamètre D4 de la deuxième portion d'extrémité longitudinale 340.

Selon une variante de réalisation non représentée, on peut prévoir un ou des méplats sur la deuxième portion d'extrémité longitudinale 340 permettant de détromper l'orientation du maneton sur la manivelle lors de l'assemblage.

Selon le mode de réalisation avec une portion cylindrique tronquée 320, elle peut être agencée axialement entre la portion sphérique tronquée 310 et l'une des portions d'extrémité longitudinale, la deuxième portion d'extrémité longitudinale 340 dans l'exemple illustré. Selon la variante dans laquelle la portion cylindrique 320 n'est pas tronquée, il s'agit d'une portion cylindrique intermédiaire entre la portion sphérique tronquée 310 et la deuxième portion d'extrémité longitudinale 340.

À titre d'exemple, la portion cylindrique tronquée 320 et la deuxième portion d'extrémité longitudinale 340 peuvent ne pas être destinées à être reçues à l'intérieur de la boîte à rotule correspondante à l'état assemblé de la bielle.

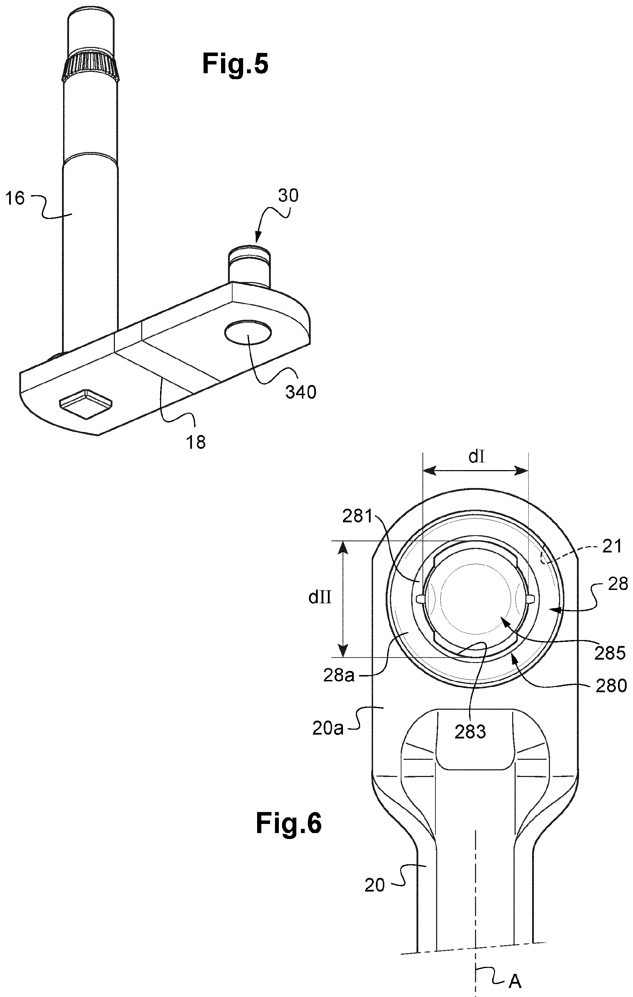

Le maneton 30 est représenté sur la figure 5 dans son état assemblé avec une manivelle correspondante, la manivelle 18 par exemple. À cet effet, le maneton 30 comporte avantageusement une portion de liaison à une manivelle correspondante, la manivelle 18 par exemple. Cette portion de liaison est par exemple formée par la deuxième portion d'extrémité longitudinale 340. Il peut s'agir d'une portion de fixation, par exemple par sertissage, à une extrémité de la manivelle correspondante 18.

En se référant de nouveau à la figure 2, cette dernière montre le maneton 30 et la boîte à rotule 28 qui est utilisée pour son montage à une extrémité longitudinale, par exemple 20a, de la bielle 20. On décrit ci-après plus en détail la boîte à rotule 28.

La boîte à rotule 28 peut notamment être réalisée en matière plastique.

Elle est destinée à être montée au niveau d'un orifice 21 à une extrémité longitudinale, 20a par exemple, de la bielle 20. Selon une variante de réalisation, la boîte à rotule 28 est réalisée directement par surmoulage au niveau de l'orifice de la bielle 20.

De façon générale, la boîte à rotule 28 présente une forme allongée s'étendant selon un axe longitudinal qui est confondu avec l'axe longitudinal B du maneton 30 lorsqu'il est reçu dans la boîte à rotule 28.

À titre d'exemple, la boîte à rotule 28 peut comporter une première partie ou partie inférieure 28a et une deuxième partie ou partie supérieure 28b. Les termes inférieur et supérieur sont définis ici en référence à l'orientation des éléments sur la figure 2. Les parties 28a, 28b de la boîte à rotule 28 sont alignées axialement.

Selon le mode de réalisation particulier illustré, la boîte à rotule 28 peut présenter sensiblement la forme d'un chapeau ou d'une cloche. La partie supérieure 28b est par exemple de façon non limitative bombée. Toute autre forme peut être envisagée. Par exemple, la partie supérieure 28b peut être de forme générale cylindrique ouverte.

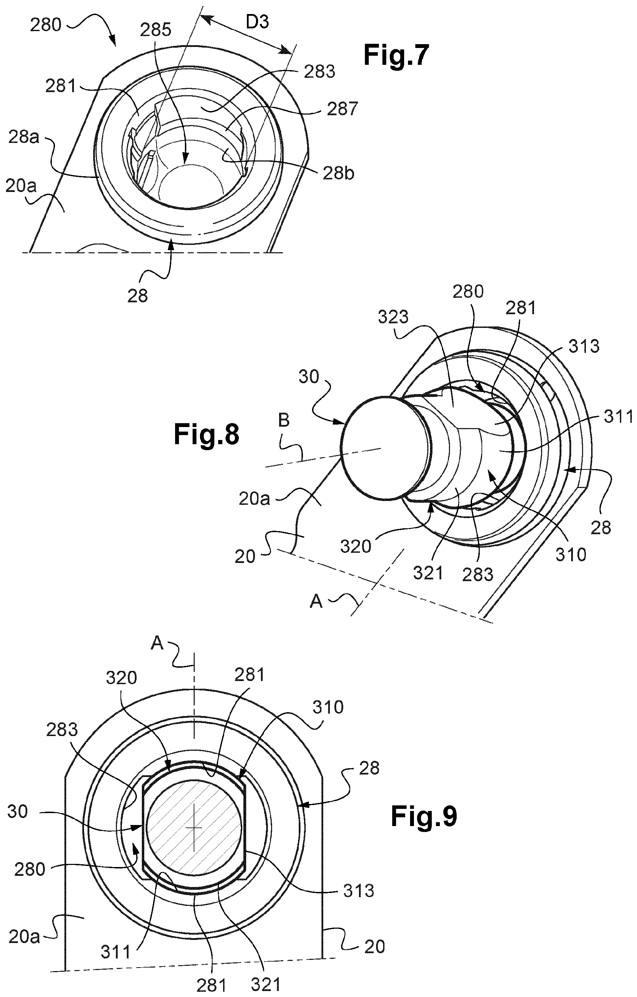

La boîte à rotule 28 définit une cavité interne 280, visible sur les figures 6 et 7. La cavité interne 280 est destinée à recevoir au moins en partie le maneton complémentaire (non représenté sur les figures 6 et 7) tel que décrit précédemment. La cavité interne 280 est dimensionnée de façon à permettre l'insertion d'un tel maneton complémentaire dans la cavité interne 280 et de façon à permettre le maintien du maneton dans la boîte à rotule à l'état assemblé de la bielle.

Selon le mode de réalisation décrit, la cavité interne 280 est centrée sur l'axe longitudinal de la boîte à rotule.

La cavité interne 280 débouche ou est ouverte à une extrémité axiale de la boîte à rotule 28. Ceci offre un accès pour l'insertion du maneton dans la boîte à rotule 28.

De façon alternative, la boite à rotule 28 peut être ouverte des deux côtés. Autrement dit, la partie supérieure 28b de la boite à rotule 28 peut ne pas être fermée mais peut également être ouverte. La cavité interne 280 peut déboucher des deux côtés.

La longueur de la cavité interne 280 de la boîte à rotule est par exemple inférieure à la longueur totale du maneton, de sorte que la boîte à rotule 28 est destinée à s'étendre autour du maneton, en laissant libre au moins une portion du maneton, par exemple la portion cylindrique tronquée et l'une des portions d'extrémité longitudinale du maneton, telle que la deuxième portion d'extrémité longitudinale.

La cavité interne 280 de la boîte à rotule 28 est destinée à recevoir au moins la portion sphérique tronquée du maneton de façon à former une liaison de type rotule.

De façon complémentaire à la portion sphérique tronquée du maneton, la cavité interne 280 présente au moins une portion de forme générale sensiblement sphérique. L'axe de révolution de la cavité interne 280 correspond à l'axe longitudinal de la boîte à rotule 28.

En particulier, la cavité interne 280 présente au moins une première portion de maintien 281 contre laquelle le maneton est destiné à venir en appui à l'assemblage de la bielle. Cette portion de maintien 281 est par exemple définie intérieurement par la partie inférieure 28a de la boîte à rotule 28.

La portion de maintien 281 définit de préférence une forme complémentaire à la forme d'un secteur sphérique du maneton que la boîte à rotule 28 est destinée à recevoir. La portion de maintien 281 est dans cet exemple une portion sphérique ou sensiblement sphérique.

De plus, la cavité interne 280 comporte au moins une deuxième portion d'ouverture 283 permettant d'agrandir une dimension de la cavité interne 280. Une telle deuxième portion d'ouverture 283 est par exemple obtenue en pratiquant une découpe dans la boîte à rotule.

De façon complémentaire au maneton 30, la cavité interne 280 de la boîte à rotule 28 présente autant de premières portions de maintien 281 que le maneton complémentaire présente de secteurs sphériques. Chaque première portion de maintien 281 s'étend sur un secteur angulaire inférieur à celui du secteur sphérique complémentaire de la portion sphérique tronquée du maneton.

Selon le mode de réalisation illustré sur les figures 6 et 7, la cavité interne 280 présente deux premières portions de maintien 281 opposées et deux deuxièmes portions d'ouverture 283 opposées. Les deux deuxièmes portions d'ouverture 283 peuvent être obtenues par des découpes pratiquées de façon opposée dans la boîte à rotule 28 pour augmenter radialement la cavité interne 280. La forme de la boite à rotule est par exemple obtenue directement par injection plastique sans reprise ultérieure.

Les deux premières portions de maintien 281 opposées sont éloignées l'une de l'autre d'une distance maximale, nommée première distance maximale dI, correspondant au diamètre d'une sphère dans laquelle s'inscrivent les deux premières portions de maintien 281. Cette première distance maximale dI est supérieure, plus précisément légèrement supérieure pour éviter un jeu excessif, au diamètre de la portion sphérique tronquée du maneton entre ses secteurs sphériques. On entend par « légèrement supérieure » un écart non nul mais très faible, notamment inférieur ou égal à 0,2mm ou 0,3mm. La première distance maximale dI est choisie de sorte que les premières portions de maintien 281 opposées puissent maintenir les secteurs sphériques du maneton à l'état assemblé de la bielle.

Les deux deuxièmes portions d'ouverture 283 sont éloignées d'une distance maximale, nommée deuxième distance maximale dII, qui est supérieure à la première distance maximale dI entre les deux premières portions de maintien 281 opposées. Cette deuxième distance maximale dII est choisie suffisante pour permettre de monter le maneton dans la cavité interne 280 sans générer d'efforts et sans outillage spécifique, en plaçant les secteurs sphériques de sa portion sphérique tronquée pour qu'ils viennent en regard des deuxièmes portions d'ouverture 283. En se référant également aux figures 3 et 4, la deuxième distance maximale dII est strictement supérieure à la distance maximale d0 séparant les deux secteurs tronqués tels que les méplats 313 de la portion sphérique tronquée 310. La deuxième distance maximale dII est également supérieure au diamètre D1 de la portion sphérique tronquée 310.

Par ailleurs, la surface interne des deuxièmes portions d'ouverture 283 peut être rectiligne ou courbe comme dans l'exemple illustré.

De plus, les deuxièmes portions d'ouverture 283 peuvent coopérer avec les méplats du maneton, ou plus précisément avec les arêtes du maneton à l'intersection d'un secteur sphérique et d'un méplat, pour empêcher la rotation du maneton dans la boîte à rotule 28.

La cavité interne 280 peut comporter de plus un fond de cavité 285. Le fond de cavité 285 est dans cet exemple défini intérieurement par la partie supérieure 28b de la boîte à rotule 28. Selon le mode de réalisation particulier illustré, l'extrémité axiale du fond de cavité 285 du côté opposé à la portion de maintien 281 est fermée. En alternative, la portion 285 définie intérieurement par la partie supérieure 28b peut ne pas présenter de paroi de fond.

La portion intérieure de la partie supérieure 28b telle que par exemple un fond de cavité 285 est avantageusement configurée pour recevoir une portion d'extrémité longitudinale du maneton, par exemple la première, et présente une forme complémentaire à cette dernière. Dans cet exemple, la portion intérieure ou fond de cavité 285 est de forme générale cylindrique centrée sur l'axe longitudinal de la boîte à rotule 28.

La portion intérieure ou fond de cavité 285 cylindrique présente un diamètre D3 supérieur au diamètre de la première portion d'extrémité longitudinale du maneton. Ce diamètre D3 est par exemple inférieur à la première distance maximale dI entre les deux premières portions de maintien 281 opposées.

Par ailleurs, la cavité interne 280 présente comme dans l'exemple illustré au moins un épaulement 287 entre une deuxième portion d'ouverture 283 et le fond de la cavité 285.

Ainsi, le maneton 30 des figures 3 à 5 peut être monté dans la boîte à rotule 28 des figures 6 et 7.

La ou les deuxièmes portions d'ouverture 283 permettent de faciliter l'insertion du maneton 30 dans la cavité interne 280 en positionnant le maneton 30 de sorte qu'en s'engageant dans la cavité interne 280 de la boîte à rotule 28, le ou les secteurs sphériques 311 de la portion sphérique tronquée 310 sont insérés en regard d'une deuxième portion d'ouverture 283 correspondante de la cavité interne 280, tel que schématisé sur la figure 8. Dans ce cas, le ou les secteurs tronqués tels que des méplats 313 s'engagent dans la cavité interne 280 de façon à venir en regard d'une ou de la première portion de maintien 281 de la cavité interne 280. L'insertion du maneton 30 peut avantageusement se faire selon l'axe longitudinal B du maneton 30.

À la fin de l'assemblage, par exemple suite à un mouvement de rotation relatif entre la boîte à rotule 28 et le maneton 30, autour de l'axe longitudinal B, le ou les secteurs sphériques 311 du maneton 30 sont agencés en regard et en appui contre les premières portions de maintien 281 de la cavité interne 280 dans une position angulaire d'assemblage prédéfinie représentée sur la figure 9. Dans une telle position, le ou les secteurs tronqués tels que des méplats 313 du maneton 30 sont agencés en regard des deuxièmes portions d'ouverture 283. Les arêtes à l'intersection d'un secteur sphérique 311 et d'un méplat 313 de la portion sphérique tronquée 310 du maneton peuvent venir en butée contre une deuxième portion d'ouverture 283 de la boîte à rotule 28.

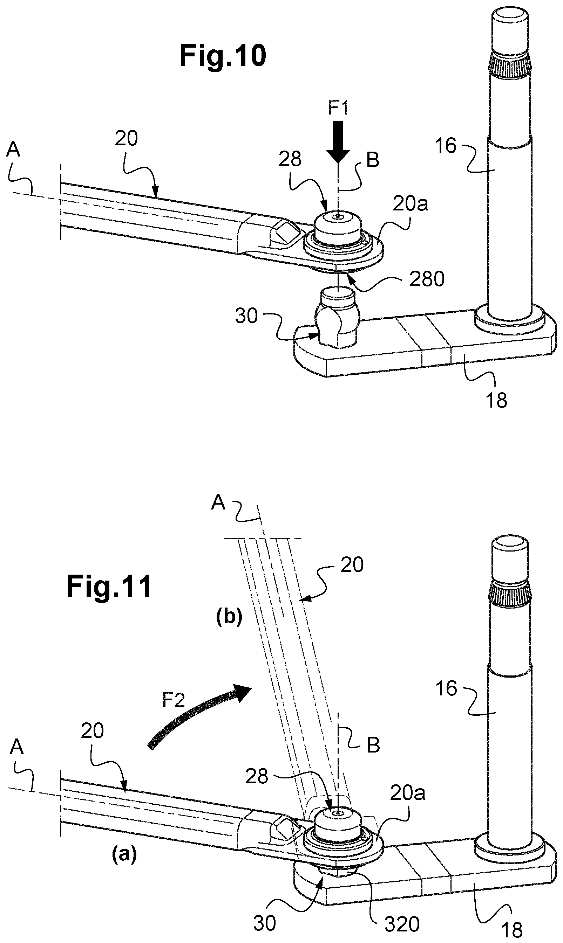

Les figures 10 et 11 représentent des étapes de montage d'une bielle 20 du système de tringlerie 10 de la figure 1.

Le procédé d'assemblage de la bielle 20 peut comprendre une étape pour assembler la boîte à rotule 28 à une extrémité longitudinale 20a de la bielle 20. La boîte à rotule 28 est avantageusement, réalisée directement sur la bielle 20 par surmoulage au niveau d'un orifice à une extrémité longitudinale 20a de la bielle 20.

Le procédé peut comporter une étape de fixation, par exemple par vissage, sertissage, ou autre, du maneton 30 à une pièce du système de tringlerie, telle qu'une manivelle 18. Le maneton 30 peut être fixé à la bielle par sa portion d'extrémité longitudinale, par exemple la deuxième, non destinée à être entourée par la boîte à rotule 28 à l'assemblage.

Le procédé d'assemblage comporte une étape d'insertion du maneton 30 dans la cavité interne de la boîte à rotule 28 portée par la bielle 20 par un mouvement de translation relatif comme schématisé sur la figure 10.

La translation se fait suivant un axe d'engagement confondu avec l'axe longitudinal B, comme schématisé par la flèche F1. Le sens de la translation schématisé par la flèche F1 n'est pas limitatif. Le mouvement de translation peut bien entendu se faire dans l'autre sens.

Le maneton 30 s'engage axialement dans la boîte à rotule 28 de façon à ce que sa portion sphérique tronquée soit logée dans la cavité interne 280 de la boîte à rotule 28. Le maneton 30 coopère par glissement avec la boîte à rotule 28. À la fin de la translation, le maneton 30 est engagé dans la boîte à rotule 28 dans une position (a) représentée en traits pleins sur la figure 11. Comme décrit en référence à la figure 8, l'insertion est facilitée car le ou les secteurs sphériques 311 de la portion sphérique tronquée 310 du maneton 30 s'engagent dans la cavité interne 280 au niveau d'une partie de plus grande dimension définie par la ou les deuxièmes portions d'ouverture 283. En se référant de nouveau à la figure 11, la boîte à rotule 28 s'étend autour du maneton 30, en laissant libre la portion cylindrique tronquée 320 du maneton 30. La première portion d'extrémité longitudinale du maneton 30 est reçue dans le fond de cavité de la boîte à rotule 28. La deuxième portion d'extrémité longitudinale du maneton 30 est quant à elle assemblée à la manivelle 18.

Par la suite, par un mouvement de rotation relatif entre le maneton 30 et la boîte à rotule 28, comme schématisé par la flèche F2, l'ensemble maneton 30 et boîte à rotule 28 passe de la position (a) en fin de translation vers une position angulaire d'assemblage prédéfinie (b) représentée en traits discontinus sur la figure 11. Il s'agit notamment d'une rotation d'un quart de tour. Dans la position angulaire d'assemblage prédéfinie (b), le ou les secteurs sphériques 311 de la portion sphérique tronquée 310 viennent en regard de la ou des premières portions de maintien 281 de la boîte à rotule 28, comme décrit en référence à la figure 9.

Ainsi, on peut avoir un montage simple de la bielle 20 ne nécessitant aucun outil spécifique. L'assemblage par translation suivi de la rotation jusqu'à la position angulaire d'assemblage prédéfinie (b) est réalisée avec des efforts minimums du fait du glissement entre la surface externe du maneton 30 et la surface interne de la boîte à rotule 28. Cet assemblage peut être réalisé par un opérateur sur une ligne de constructeur automobile par exemple lorsque celui-ci reçoit un système de tringlerie en pièces détachées.

Dans la position angulaire d'assemblage prédéfinie (b), la coopération des secteurs sphériques 311 du maneton 30 et des portions de maintien 281 avantageusement sphériques de la boîte à rotule 28 assurent une transmission efficace des efforts en utilisation de la bielle 20.

Enfin, la coopération entre les arrêtes 315 du maneton 30, à l'intersection des méplats 313 avec les secteurs sphériques 311, et les surfaces internes de la boîte à rotule 28 permet d'obtenir un blocage efficace du maneton dans la position d'assemblage prédéfinie, limitant le risque de libération en rotation du maneton 30 par rapport à la boîte à rotule 28.

## Revendications

1. Maneton (30) pour une bielle (20) d'un système de tringlerie (10) d'actionnement d'essuie-glaces, le maneton (30) étant configuré pour être reçu dans une cavité interne (280) complémentaire d'une boîte à rotule (28) du système de tringlerie (10),
le maneton comportant une portion sphérique tronquée (310) présentant au moins deux secteurs sphériques (311) opposés et au moins deux méplats (313) opposés réalisés selon deux plans parallèles et le maneton présentant une forme générale allongée selon un axe longitudinal (B) passant par le centre de la portion sphérique tronquée (310),
**caractérisé en ce que** les deux méplats (313) opposés sont symétriques par rapport à un plan médian passant par le centre de la portion sphérique tronquée (310) et contenant l'axe longitudinal (B) du maneton (30).

2. Maneton (30) selon la revendication précédente, dans lequel lesdits au moins deux secteurs sphériques (311) de la portion sphérique tronquée (310) s'étendent respectivement sur un secteur angulaire inférieur ou égal à 90°.

3. Maneton (30) selon l'une des revendications précédentes, comportant une portion cylindrique tronquée (320), agencée dans le prolongement axial de ladite portion sphérique (310) et présentant au moins un secteur tronqué (323) dans la continuité d'un secteur tronqué (313) de la portion sphérique tronquée (310).

4. Maneton (30) selon l'une quelconque des revendications précédentes, comportant une première portion d'extrémité longitudinale (330) et une deuxième portion d'extrémité longitudinale (340), la portion sphérique tronquée (310) étant située axialement entre les première (330) et deuxième (340) portions d'extrémités longitudinales.

5. Boîte à rotule (28) pour une bielle d'un système de tringlerie (10) d'actionnement d'essuie-glaces, la boîte à rotule (28) comportant une cavité interne (280) configurée pour recevoir un maneton (30) complémentaire selon l'une quelconque des revendications précédentes,
**caractérisée en ce que** la cavité interne (280) présente au moins une première portion de maintien (281) du maneton (30) et au moins une deuxième portion d'ouverture (283) augmentant une dimension de la cavité interne (280).

6. Boîte à rotule (28) selon la revendication précédente, dans laquelle ladite au moins une première portion (281) définit une portion sphérique.

7. Boîte à rotule (28) selon l'une des revendications 5 ou 6, dans laquelle la cavité interne (280) présente au moins deux premières portions de maintien (281) opposées et au moins deux deuxièmes portions d'ouverture (283) opposées telles que la distance maximale (dII) entre les deux deuxièmes portions (283) est supérieure à la distance maximale (dI) entre les deux premières portions (281).

8. Boîte à rotule (28) selon l'une quelconque des revendications 5 à 7, présentant une forme générale allongée selon un axe longitudinal passant par le centre de la cavité interne (280).

9. Boîte à rotule (28) selon la revendication précédente, dans laquelle la cavité interne (280) comporte un fond de cavité (285) de forme générale cylindrique centré sur l'axe longitudinal de la boîte à rotule (28).

10. Système de tringlerie (10) d'actionnement d'essuie-glaces, comportant au moins une bielle (20) présentant une forme générale allongée, **caractérisée en ce que** ladite au moins une bielle (20) comporte à une extrémité longitudinale (20a) une boîte à rotule (28) selon l'une quelconque des revendications 5 à 9, , recevant un maneton (30) selon l'une quelconque des revendications 1 à 4, dans une position angulaire d'assemblage prédéfinie, dans laquelle ledit au moins un secteur sphérique (311) de la portion sphérique tronquée (310) du maneton (30) est agencé en appui contre ladite au moins une première portion de maintien (281) en regard de la boîte à rotule (28).

11. Procédé d'assemblage d'une bielle (20) du système de tringlerie (10) selon la revendication précédente comportant une boîte à rotule (28) à une extrémité longitudinale (20a), **caractérisé en ce qu'**il comprend les étapes suivantes :
- insérer le maneton (30) dans la cavité interne (280) de la boîte à rotule (28) portée par la bielle (20) par un mouvement de translation relatif, de sorte que ledit au moins un secteur sphérique (311) de la portion sphérique tronquée (310) du maneton (30) est agencé en regard d'une deuxième portion d'ouverture (283) de la cavité interne (280) de la boîte à rotule (28), et que ledit au moins un secteur tronqué (313) de la portion sphérique tronquée (310) du maneton (30) est agencé en regard d'une première portion de maintien (281) de la cavité interne (280) de la boîte à rotule (28), et
- effectuer un mouvement de rotation relatif entre le maneton (30) et la boîte à rotule (28), jusqu'à une position angulaire d'assemblage prédéfinie dans laquelle ledit au moins un secteur sphérique (311) de la portion sphérique tronquée (310) du maneton (30) vient en regard d'une première portion de maintien (281) de la cavité interne (280) de la boîte à rotule (28).

## Patentansprüche

1. Ein Kurbelzapfen (30) für eine Pleuelstange (20) eines Wischerbetätigungsgestängesystems (10), wobei der Kurbelzapfen (30) dazu ausgelegt ist, in einem komplementären Innenhohlraum (280) eines Kugelgelenkgehäuses (28) des Gestängesystems (10) aufgenommen zu werden, wobei der Kurbelzapfen einen abgeschnittenen Kugelabschnitt (310) umfasst, der mindestens einen gegenüberliegenden Kugelabschnitt (311) und mindestens zwei gegenüberliegende Abflachungen (313) aufweist, die auf zwei parallelen Ebenen realisiert sind,
und wobei der Kurbelzapfen eine längliche Gesamtform entlang einer Längsachse (B) aufweist, die durch das Zentrum des abgeschnittenen Kugelabschnitts (310) verläuft, **dadurch gekennzeichnet, dass** die zwei gegenüberliegenden Abflachungen (313) symmetrisch bezüglich einer Medianebene sind, die durch das Zentrum des abgeschnittenen Kugelabschnitts (310) verläuft und die Längsachse (B) des Kurbelzapfens (30) enthält.

2. Der Kurbelzapfen (30) nach dem vorhergehenden Anspruch, wobei die mindestens zwei Kugelabschnitte (311) des abgeschnittenen Kugelabschnitts (310) sich jeweils über einen Winkelsektor von kleiner oder gleich 90° erstrecken.

3. Der Kurbelzapfen (30) nach einem der vorhergehenden Ansprüche, mit einem abgeschnittenen zylindrischen Abschnitt (320), der in der axialen Fortsetzung des Kugelabschnitts (310) angeordnet ist und mindestens einen abgeschnittenen Sektor (323) in der Fortsetzung eines abgeschnittenen Sektors (313) des abgeschnittenen Kugelabschnitts (310) aufweist.

4. Der Kurbelzapfen (30) nach einem der vorhergehenden Ansprüche, mit einem ersten Längsendabschnitt (330) und einem zweiten Längsendabschnitt (340), wobei der abgeschnittene Kugelabschnitt (310) axial zwischen dem ersten (330) und dem zweiten (340) Längsendabschnitt angeordnet ist.

5. Ein Kugelgelenkgehäuse (28) für eine Pleuelstange eines Wischerbetätigungsgestängesystems (10), wobei das Kugelgelenkgehäuse (28) einen Innenhohlraum (280) aufweist, der dazu ausgelegt ist, einen komplementären Kurbelzapfen (30) nach einem der vorhergehenden Ansprüche aufzunehmen, **dadurch gekennzeichnet, dass** der Innenhohlraum (280) mindestens einen ersten Halteabschnitt (281) zum Halten des Kurbelzapfens (30) und mindestens einen zweiten Öffnungsabschnitt (283) aufweist, der eine Abmessung des Innenhohlraums (280) vergrößert.

6. Das Kugelgelenkgehäuse (28) nach dem vorhergehenden Anspruch, wobei der mindestens eine erste Abschnitt (281) einen Kugelabschnitt definiert.

7. Das Kugelgelenkgehäuse (28) nach einem der Ansprüche 5 oder 6, wobei der Innenhohlraum (280) mindestens zwei gegenüberliegende erste Halteabschnitte (281) und mindestens zwei gegenüberliegende zweite Öffnungsabschnitte (283) aufweist, so dass der maximale Abstand (dII) zwischen den zwei zweiten Abschnitten (283) größer ist als der maximale Abstand (dI) zwischen den zwei ersten Abschnitten (281).

8. Das Kugelgelenkgehäuse (28) nach einem der Ansprüche 5 bis 7, mit einer länglichen Gesamtform entlang einer Längsachse, die durch das Zentrum des Innenhohlraums (280) verläuft.

9. Das Kugelgelenkgehäuse (28) nach dem vorhergehenden Anspruch, wobei der Innenhohlraum (280) einen Hohlraumboden (285) mit zylindrischer Gesamtform aufweist, der auf der Längsachse des Kugelgelenkgehäuses (28) zentriert ist.

10. Ein Wischerbetätigungsgestängesystem (10) mit mindestens einer Pleuelstange (20), die eine längliche Gesamtform aufweist, adurch gekennzeichnet, dass die mindestens eine Pleuelstange (20) an einem Längsende (20a) ein Kugelgelenkgehäuse (28) nach einem der Ansprüche 5 bis 9 aufweist, das einen Kurbelzapfen (30) nach einem der Ansprüche 1 bis 4 in einer vordefinierten Winkelmontageposition aufnimmt, wobei der mindestens eine Kugelabschnitt (311) des abgeschnittenen Kugelabschnitts (310) des Kurbelzapfens (30) so angeordnet ist, dass er an dem mindestens einen gegenüberliegenden ersten Halteabschnitt (281) des Kugelgelenkgehäuses (28) anliegt.

11. Ein Verfahren zum Montieren einer Pleuelstange (20) des Gestängesystems (10) nach dem vorhergehenden Anspruch, die ein Kugelgelenkgehäuse (28) an einem Längsende (20a) aufweist,
**dadurch gekennzeichnet, dass** es die folgenden Schritte umfasst:
- Einführen des Kurbelzapfens (30) in den Innenhohlraum (280) des vom Kurbelzapfen (20) getragenen Kugelgelenkgehäuses (28) mittels einer relativen translatorischen Bewegung, so dass der mindestens eine Kugelabschnitt (311) des abgeschnittenen Kugelabschnitts (310) des Kurbelzapfens (30) neben einem zweiten Öffnungsabschnitt (283) des Innenhohlraums (280) des Kugelgelenkgehäuses (28) angeordnet wird, und so dass der mindestens eine abgeschnittene Sektor (313) des abgeschnittenen Kugelabschnitts (310) des Kurbelzapfens (30) neben einem ersten Halteabschnitt (281) des Innenhohlraums (280) des Kugelgelenkgehäuses (28) angeordnet wird, und
- Ausführen einer relativen Rotationsbewegung zwischen dem Kurbelzapfen (30) und dem Kugelgelenkgehäuse (28) bis zu einer vordefinierten Winkelmontageposition, in der der mindestens eine Kugelabschnitt (311) des abgeschnittenen Kugelabschnitts (310) des Kurbelzapfens (30) neben einem ersten Halteabschnitt (281) des Innenhohlraums (280) des Kugelgelenkgehäuses (28) liegt.

## Claims

1. A crank pin (30) for a connecting rod (20) of a wiper actuating linkage system (10), the crank pin (30) being configured to be received in a complementary internal cavity (280) of a ball joint housing (28) of the linkage system (10),
the crank pin comprising a truncated spherical portion (310) having at least one opposite spherical sector (311) and at least two opposite flats (313) realized on two parallel planes
and the crank pin having an elongate overall shape along a longitudinal axis (B) passing through the center of the truncated spherical portion (310)
**characterized in that** the two opposite flats (313) are symmetric with respect to a median plane passing through the center of the truncated spherical portion (310) and containing the longitudinal axis (B) of the crank pin (30)

2. The crank pin (30) as claimed in the preceding claim, wherein said at least two spherical sectors (311) of the truncated spherical portion (310) extend respectively over an angular sector of less than or equal to 90°.

3. The crank pin (30) as claimed in any one of the preceding claims, having a truncated cylindrical portion (320) which is arranged in the axial continuation of said spherical portion (310) and has at least one truncated sector (323) in the continuation of a truncated sector (313) of the truncated spherical portion (310).

4. The crank pin (30) as claimed in any one of the preceding claims, having a first longitudinal end portion (330) and a second longitudinal end portion (340), the truncated spherical portion (310) being situated axially between the first (330) and second (340) longitudinal end portions.

5. A ball joint housing (28) for a connecting rod of a wiper actuating linkage system (10), the ball joint housing (28) having an internal cavity (280) configured to receive a complementary crank pin (30) as claimed in any one of the preceding claims,
**characterized in that** the internal cavity (280) has at least one first, holding portion (281) for holding the crank pin (30) and at least one second, opening portion (283) that increases a dimension of the internal cavity (280).

6. The ball joint housing (28) as claimed in the preceding claim, wherein said at least one first portion (281) defines a spherical portion.

7. The ball joint housing (28) as claimed in either of claims 5 or 6, wherein the internal cavity (280) has at least two opposite first, holding portions (281) and at least two opposite second, opening portions (283) such that the maximum distance (dII) between the two second portions (283) is greater than the maximum distance (dI) between the two first portions (281).

8. The ball joint housing (28) as claimed in any one of claims 5 to 7, having an elongate overall shape along a longitudinal axis passing through the center of the internal cavity (280).

9. The ball joint housing (28) as claimed in the preceding claim, wherein the internal cavity (280) has a cavity bottom (285) of cylindrical overall shape centered on the longitudinal axis of the ball joint housing (28).

10. A wiper actuating linkage system (10) having at least one connecting rod (20) that has an elongate overall shape, **characterized in that** said at least one connecting rod (20) has, at one longitudinal end (20a), a ball joint housing (28) as claimed in any one of claims 5 to 9, which receives a crank pin (30) as claimed in any one of claims 1 to 4 in a predefined angular assembly position, wherein said at least one spherical sector (311) of the truncated spherical portion (310) of the crank pin (30) is arranged so as to bear against said at least one facing first, holding portion (281) of the ball joint housing (28).

11. A method for assembling a connecting rod (20) of the linkage system (10) as claimed in the preceding claim, having a ball joint housing (28) at one longitudinal end (20a), **characterized in that** it comprises the following steps:
- inserting the crank pin (30) into the internal cavity (280) of the ball joint housing (28) carried by the connecting rod (20) by way of a relative translational movement, such that said at least one spherical sector (311) of the truncated spherical portion (310) of the crank pin (30) is arranged next to a second, opening portion (283) of the internal cavity (280) of the ball joint housing (28), and such that said at least one truncated sector (313) of the truncated spherical portion (310) of the crank pin (30) is arranged next to a first, holding portion (281) of the internal cavity (280) of the ball joint housing (28), and
- carrying out a relative rotational movement between the crank pin (30) and the ball joint housing (28), as far as a predefined angular assembly position in which said at least one spherical sector (311) of the truncated spherical portion (310) of the crank pin (30) is next to a first, holding portion (281) of the internal cavity (280) of the ball joint housing (28).
